# EUROPÄISCHE PATENTSCHRIFT

(11) **EP 0 991 875 B1**
(45) Veröffentlichungstag und Bekanntmachung des Hinweises auf die Patenterteilung: **10.10.2001**
(21) Anmeldenummer: 98934991.5
(22) Anmeldetag: 23.06.1998
(51) Int. Cl.: F16F 7/08, A63B 21/012, A61F 5/01

(54) **GLEITVERBINDUNG**
SLIDING CONNECTION
FIXATION COULISSANTE

(30) Priorität: 24.06.1997 NL 1006380
(43) Veröffentlichungstag der Anmeldung: 12.04.2000
(73) Patentinhaber: Otto Bock Orthopädische Industrie Besitz- und Verwaltungs-Kommanditgesellschaft, 37115 Duderstadt (DE)
(72) Erfinder: OLDE-HEUVEL, Bernardus, Johannes, Maria, NL-7482 LD Haaksbergen (NL); BESSELINK, Petrus, Antonius, NL-7534 AT Enschede (NL)
(74) Vertreter: Gramm, Werner, Prof. Dipl.-Ing.
(86) Internationale Anmeldenummer: EP9803829
(87) Internationale Veröffentlichungsnummer: WO9859183

(56) Entgegenhaltungen:
- WO-A-86/05566
- WO-A-91/02179
- WO-A-93/07404

## Beschreibung

Die Erfindung betrifft eine lineare Gleitverbindung zwischen zwei relativ zueinander hin- und herverschiebbaren Bauteilen mit einer in zumindest einer der beiden axialen Verschieberichtungen wirksamen Dämpfung.

Bei einer derartigen Gleitverbindung ist der in einer ersten Verschiebungsrichtung auftretende Widerstand unabhängig von dem Widerstand, der sich bei einer Verschiebung in entgegengesetzter Richtung einstellt.

Vorbekannte Dämpfer umfassen federelastische Elemente wie z.B. eine Feder oder eine gasgefüllte Kammer. Bei anderen Ausführungsformen ist ein mit Flüssigkeit gefüllter Zylinder vorgesehen, durch den ein mit Ausnehmung versehener Kolben verschiebbar ist (oder umgekehrt).

Der Erfindung liegt die Aufgabe zugrunde, eine lineare Gleitverbindung mit einer die Vorteile der vorbekannten Ausführungformen aufweisenden Dämpfung zu entwickeln, wobei ein größerer Anwendungsbereich derartiger Gleitverbindungen geschaffen werden soll.

In Verbindung mit den eingangs genannten Merkmalen wird diese Aufgabe erfindungsgemäß gelöst durch einen mechanischen Reibungsdämpfer, der einen als Reibungs- bzw. Klemmelement wirkenden Drahtkorb aufweist, der das erste der beiden verschiebbaren Bauteile auf einen Längenabschnitt unter Anlage an dessen Mantelfläche konzentrisch umschließt,
mit seinem einen axialen Ende (erstes Korbende) an dem zweiten Bauteil festgelegt und mit seinem anderen axialen Ende (zweites Korbende) an diesem zweiten Bauteil axial längsverschieblich gelagert ist, und
an diesem zweiten Korbende von einem federelastischen Spannelement in Axialrichtung so beaufschlagt wird, daß der Drahtkorb in seiner axialen Länge etwas gedehnt wird unter gleichzeitigem weitgehend radialen Andrücken gegen die von ihm umschlossene Mantelfläche des ersten Bauteils.

Die Dämpfung ergibt sich bei dieser Lösung aus der Klemmkraft, mit der der Drahtkorb das von ihm umschlossene Bauteil beaufschlagt. Werden die Enden des Drahtkorbes auseinandergezogen, erfolgt eine Verringerung des Korbdurchmessers und damit eine verstärkte Beaufschlagung des umschlossenen Bauteils. Diese axiale Korbverlängerung ergibt sich bei einer Relativverschiebung der beiden Bauteile gegeneinander. Die dadurch aufgebrachte Klemmkraft wird erst dann wieder gelöst, wenn eine Relativverschiebung der beiden Bauteile in entgegengesetzter Richtung erfolgt unter Aufbringung einer Kraft, die die Kraft des federelastischen Spannelementes übersteigt.

Die maximale Klemmkraft des Drahtkorbes ist u.a. abhängig von der Länge sowie dem Durchmesser des Drahtkorbes, dem Reibungskoeffizienten zwischen Drahtkorb und dem umschlossenen Bauteil und dem Umschlingungswinkel, unter dem das Drahtmaterial zur Bildung des Drahtkorbes gewunden wurde.

Die erfindungsgemäße Lösung ermöglicht eine Gleitverbindung, die in einer ersten Verschieberichtung zwischen zwei Bauteilen einen großen Verschiebungswiderstand, also eine hohe Dämpfung, in entgegengesetzter Verschieberichtung aber praktisch gar keine Dämpfung aufbaut. Der Unterschied in der Dämpfungskraft bei entgegengesetzten Verschieberichtungen kann problemlos in der Größenordnung eines Faktors 100 liegen.

Ein weiteres Merkmal der erfindungsgemäßen Gleitverbindung liegt darin, daß der Verschiebewiderstand unabhängig ist von der Verschiebegeschwindigkeit. Dabei ist ferner vorteilhaft, daß die Gleitverbindung praktisch verschleißfrei arbeitet. Außerdem läßt sich die gewünschte Dämpfungscharakteristik in einfacher Weise verändern durch Änderung der vorstehend genannten, die maximale Klemmkraft bestimmenden Parameter und durch Veränderung der Kraft des federelastischen Spannelementes.

Es ist zweckmäßig, wenn der vom Drahtkorb umschlossene und in diesem längsverschieblich geführte Abschnitt des ersten Bauteiles einen runden Querschnitt aufweist. Dieses zweite Bauteil kann dann im wesentlichen aus standardisiertem Stangen- oder Rohrmaterial bestehen. Der Drahtkorb besteht vorzugsweise aus einem Drahtgewebe, wodurch eine hohe Klemmkraft mit einem verhältnismäßig kurz ausgebildeten Drahtkorb realisierbar ist. Die Herstellung von Drahtgeweben ist verhältnismäßig einfach.

Eine einfache Konstruktion ist dann gewährleistet, wenn das zweite Bauteil ein zylindrisches Gehäuse aufweist, das den Drahtkorb konzentrisch umschließt. Das zylindrische Gehäuse nimmt dann die gesamte Gleitverbindung auf und schließt diese von der umgebenden Konstruktion ab. Ein einfacher Aufbau ist auch dann gewährleistet, wenn das federelastische Spannelement zumindest eine Druckfeder aufweist, die den Drahtkorb konzentrisch umschließt und sich mit ihrem einen Ende an dem axial längsverschieblich gelagerten Korbende abstützt.

Dabei ist es vorteilhaft, wenn in radialer Anordnung zwischen dem ersten Korbende und dem längsverschieblich geführten Abschnitt des ersten Bauteils für letzteren ein achsparalleles Führungselement vorgesehen ist. Hierdurch ergibt sich eine besonders stabile Ausführungsform; die Klemmung zwischen den Bauteilen ist besonders starr, wobei das genannte Führungselement auch größere, nicht in axialer Richtung aufgebrachte Kräfte aufzunehmen vermag.

Zur Veränderung der Dämpfungscharakteristik können zwischen dem zweiten Korbende und dem ersten Bauteil zwei Druckfedern vorgesehen werden. Hierdurch läßt sich auch eine von der jeweiligen Länge der Gleitverbindung abhängende Kraft/Weg-Charakteristik der Dämpfung erzielen.

Die erfindungsgemäße Gleitverbindung läßt sich vorteilhaft als Dämpfer in einer Prothese oder Orthese verwenden, wo es ganz besonders auf Zuverlässigkeit und Justierfähigkeit der Kraft/-Weg-Dämpfungscharakteristik ankommt.

Vorteilhaft ist ferner die Verwendung der erfindungsgemäßen Gleitverbindung als Dämpfer in einem Fitnessgerät zum Muskeltraining. Die Gleitverbindung wird hier anstelle einer Federeinrichtung verwendet. Bei herkömmlichen Einrichtungen sind hier häufig Gewichte vorgesehen, die einerseits eine schwere Konstruktion bedingen und andererseits in der Regel nur Vertikalbewegungen zulassen. Nachteilig ist dabei ferner, daß durch das Anheben von Gewichten Potentialenergie aufgebaut wird, die bei Beendigung der Übung schlagartig abgebaut werden kann. Ferner ist die Justierung der mit Gewichten arbeitenden Geräte zeit- und arbeitsaufwendig.

Eine weiterhin abgewandelte Ausführungsform gemäß der Erfindung ist gekennzeichnet durch zwei hintereinander angeordnete Druckfedern, die sich mit ihren benachbarten Federenden an dem zweiten Bauteil abstützen und mit ihren jeweils anderen Federenden an jeweils einem axial gegeneinander verschiebbaren Federlager anliegen. Dabei ist es zweckmäßig, wenn die axiale Verschiebung der beiden Federlager gegeneinander manuell, z. B. durch Betätigung eines Bowdenzuges erfolgt. Bei einer derartigen Ausführungsform ist es z.B. zweckmäßig, wenn die beiden Bauteile eine teleskopisch längsverstellbare Lenksäule bilden, wobei das eine Bauteil mit einem Lenkrad versehen ist und das andere Bauteil an einem Fahrzeugrahmen festlegbar ist. Diese Ausbildung kann auch als Schutzeinrichtung gegen Übertragung großer Kräfte im Falle eines Unfalls bzw. eines Zusammenstoßes wirken. Nach einer aufgrund äußerer Krafteinwirkung erfolgten Verkürzung der Lenksäule kann die ursprüngliche Form in einfacher Weise wiederhergestellt werden. Durch manuelles Zusammendrücken der beiden Federlager gegeneinander läßt sich die Kiemmkraft reduzieren bzw. aufheben, so daß wunschgemäß eine Längsverstellung der Lenksäule möglich ist. Außerdem muß eine Verdrehsicherung zwischen den einzelnen Bauteilen vorgesehen werden, was z.B. durch eine Nut/Feder-Ver bindung möglich ist.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung sind einige als Beispiele dienende Ausführungsformen der Erfindung dargestellt. Es zeigen:
- **Figur 1 -**: im Längsschnitt eine lineare Gleitverbindung zwischen zwei relativ zueinander hin- und herverschiebbaren Bauteilen mit einem Dämpfer, der dem Zusammenschieben der beiden Bauteile eine verhältnismäßig hohe Dämpfungskraft, einem Auseinanderziehen der beiden Bauteile hingegen nur einen verhältnismäßig geringen Widerstand entgegensetzt;
- **Figur 2 -**: in einer Darstellung gemäß Figur 1 ein auf einem langgestreckten ersten Bauteil längsverschieblich gelagertes zweites Bauteil, wobei ein Dämpfer einer in Figur 2 nach rechts gerichteten Verschiebung des ersten Bauteils eine verhältnismäßig hohe und einer Linksverschiebung nur eine verhältnismäßig geringe Dämpfungskraft entgegensetzt;
- **Figur 3 -**: eine weiterhin abgewandelte Ausführungsform in einer Darstellung gemäß Figur 1 mit Dämpfungseigenschaften gemäß der Ausführungsform in Figur 2, wobei jedoch die Kraft/Weg-Charakteristik von der jeweiligen Länge der Gleitverbindung abhängt;
- **Figur 4 -**: zeigt eine weiterhin abgewandelte Ausführungsform mit Dämpfungseigenschaften entsprechend der in Figur 1 dargestellten Ausführungsform, wobei jedoch die Kraft/Weg-Charakteristik wiederum von der jeweiligen Länge der Gleitverbindung abhängt;
- **Figur 5 -**: eine weiterhin abgewandelte Ausführungsform mit Dämpfungseigenschaften gemäß dem Lösungsvorschlag nach Figur 1, jedoch mit einer von der jeweiligen Länge der Gleitverbindung abhängenden Kraft/Weg-Charakteristik;
- **Figur 6 -**: einen lotrechten Schnitt durch eine Beinprothese mit einer eingebauten Gleitverbindung gemäß der Erfindung;
- **Figur 7 -**: in vergrößertem Maßstab einen Ausschnitt der Figur 6 in gegenüber der Figur 6 etwas axial verdrehter Lage;
- **Figur 8 -**: in schematischer Darstellung ein Fitnessgerät mit einer erfindungsgemäßen Gleitverbindung;
- **Figur 9 -**: in schematischer Darstellung im Längsschnitt eine längsverstellbare Lenksäule mit einer erfindungsgemäßen Gleitverbindung und
- **Figur 10 -**: die Lenksäule gemäß Figur 9 in etwas abgewandelter Ausführungsform.

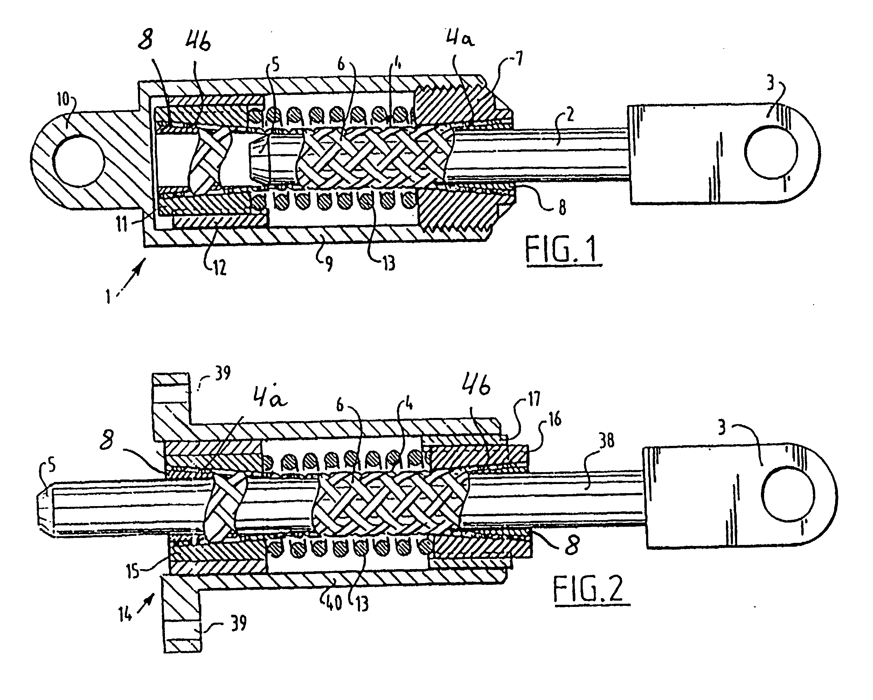

Figur 1 zeigt eine lineare Gleitverbindung 1 zwischen einem ersten Bauteil 2, 3 und einem zweiten Bauteil 9, 10. Das erste Bauteil setzt sich zusammen aus einer zylindrischen Stange 2, die an ihrem in Figur 1 rechten Ende übergeht in eine Befestigungsöse 3 und an ihrem gegenüberliegenden Ende in einen Konus 5. Das zweite Bauteil besteht im wesentlichen aus einem zylindrischen Gehäuse 9, an dessen in Figur 1 linkem Ende eine Befestigungsöse 10 vorgesehen ist.

Zwischen dem ersten und zweiten Bauteil ist eine in zumindest einer der beiden axialen Verschieberichtungen wirksame Dämpfung vorgesehen und zwar in Form eines mechanischen Reibungsdämpfers, der einen als Reibungs- bzw. Klemmelement wirkenden Drahtkorb 4 aufweist, der die zylindrische Stange 2 des ersten Bauteils auf einem Längenabschnitt unter Anlage an ihrer Mantelfläche konzentrisch umschließt. Das in Figur 1 rechts liegende erste Korbende 4a ist an dem Gehäuse 9 des zweiten Bauteils festgelegt, während das gegenüberliegende zweite Korbende 4b in dem zylindrischen Gehäuse 9 axial längsverschieblich gelagert ist. Der Drahtkorb 4 besteht aus einem Drahtgewebe 6 und ist an seinen beiden Enden 4a, 4b jeweils zum Korbende hin konisch erweitert und hier durch einen jeweils inneren Konusklemmring 8 festgelegt. Dabei erfolgt die Festlegung des ersten Korbendes 4a in einem in das rechte Ende des Gehäuses 9 eingeschraubten äußeren Konusring 7, während das zweite Korbende 4b in einer Gleithülse 11 festgelegt ist, die auf ihrem inneren Umfang in Anpassung an das zweite Korbende 4b konusförmig ausgebildet und mit ihrer zylindrischen Mantelfläche in einem Lagerring 12 längsverschiebbar geführt ist, der an der Innenwandung des zylindrischen Gehäuses 9 ortsfest festgelegt ist und für die Gleithülse 11 eine Verdrehsicherung bildet.

Der zylindrische Abschnitt des Drahtkorbes 4 ist von einer Druckfeder 13 umschlossen, die sich mit ihrem in Figur 1 rechts liegenden Ende an dem äußeren Konusring 7 und somit an dem ersten Bauteil abstützt und mit ihrem in Figur 1 links liegenden Ende die Gleithülse 11 in Axialrichtung so beaufschlagt, daß der Drahtkorb 4 in seiner axialen Länge etwas gedehnt wird unter gleichzeitigem weitgehend radialen Andrücken gegen die von ihm umschlossene Mantelfläche der zylindrischen Stange 2.

Der innere Konusklemmring 8 bildet für die zylindrische Stange 2 ein achsparalleles Führungselement. Im übrigen ist die Stange 2 in dem Drahtkorb 4 längsverschieblich geführt.

Werden die beiden Befestigungsösen 3, 10 gegeneinander geschoben, wird also die Länge der in Figur 1 dargestellten Gleitverbindung 1 verkürzt, übt der Drahtkorb 4 auf die Stange 2 eine dem Einschieben des ersten Bauteils 2, 3 in das zweite Bauteil 9, 10 entgegenwirkende Dämpfungskraft aus. Werden die beiden Bauteile wieder auseinandergezogen, wirkt die von dem Drahtkorb 4 auf die Stange 2 ausgeübte Klemmkraft nur so lange, bis die die beiden Bauteile auseinanderziehende Kraft größer ist als die den äußeren Konusring 7 und die Gleithülse 11 auseinanderdrükkende Federkraft der Druckfeder 13. Bei dieser Kraftüberschreitung bewegt sich dann die Gleithülse 11 in axialer Richtung etwas auf den äußeren Konusring 7 zu, wodurch die dem Auseinanderziehen der beiden Bauteile entgegenwirkende Klemmkraft abnimmt. Das Auseinanderziehen der beiden Bauteile läßt sich somit leichter bewerkstelligen als das Zusammendrücken der beiden Bauteile.

Figur 2 zeigt eine Gleitverbindung 14, bei dem das erste Bauteil eine sich durch das zweite Bauteil 39, 40 hindurch erstreckende zylindrische Stange 38 aufweist, auf der das zweite Bauteil hin- und herverschiebbar gelagert ist. Jedoch ist die Lageranordnung gegenüber der Ausführungsform gemäß Figur 1 vertauscht: das Festlager befindet sich nunmehr an dem in Figur 2 links liegende Ende des zweiten Bauteils und das verschiebbare Lager am rechten Ende des zweiten Bauteils. Das Festlager für den Drahtkorb 4 weist wiederum einen fest mit dem zylindrischen Gehäuse 40 des zweiten Bauteils verbundenen äußeren Konusring 15 auf, während das verschiebbare Lager für das zweite Korbende 4b wiederum eine Gleithülse 16 umfaßt, die in einem ortsfest am Gehäuse 40 festgelegten Lagerring 17 axialverschieblich geführt ist.

Der das Festlager für das erste Korbende 4a bildende Konusring 15 liegt nunmehr dicht neben Flanschlöchern 39 eines Befestigungsflansches an dem das zweite Bauteil bildenden Gehäuse 40. Die Dämpfung der Gleitverbindung gemäß Figur 2 wirkt in umgekehrter Richtung zu der der Figur 1. Das Auseinanderziehen der beiden Bauteile (bzw. eine Linksverschiebung des zweiten Bauteils gegenüber dem ersten Bauteil bzw. eine Rechtsverschiebung des ersten Bauteils gegenüber dem zweiten Bauteil) unterliegt einer hohen Dämpfung, während eine Verkürzung des Abstandes zwischen der Befestigungsöse 3 des ersten Bauteils und den Flanschlöchern 39 des zweiten Bauteils mit einer Kraft, die die Spannkraft der Druckfeder 13 übersteigt, einer entsprechend geringeren Dämpfung unterliegt.

Da die zylindrische Stange 38 im Prinzip endlos ausgebildet sein kann, läßt sich die Gleitverbindung gemäß Figur 2 an bestehenden Anlagen auf entsprechend orientierten Stangen anbringen.

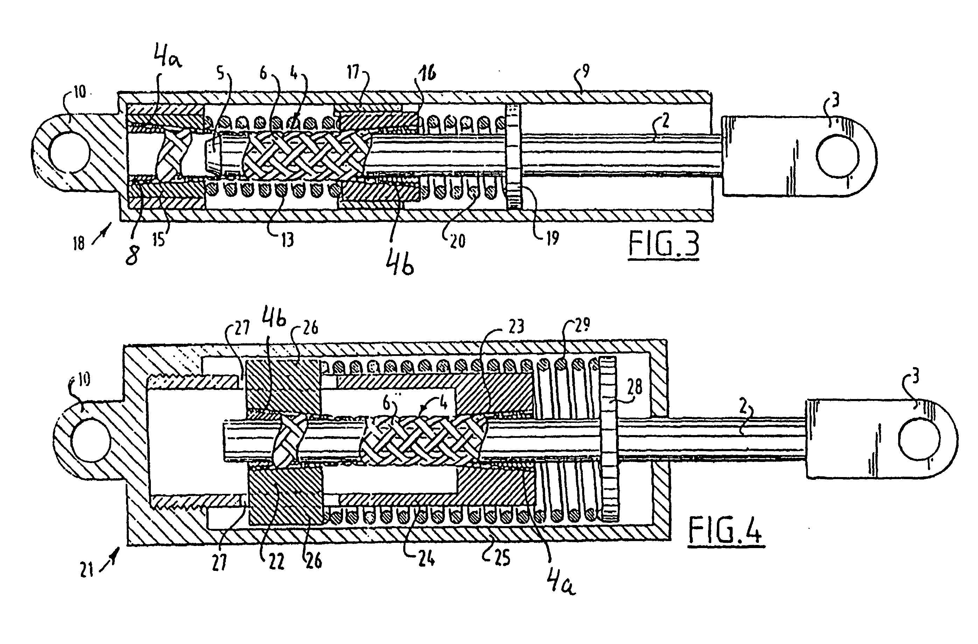

Figur 3 zeigt eine Gleitverbindung 18, die hinsichtlich der Ausbildung des zweiten Bauteils etwa der Figur 1 und hinsichtlich der Dämpferwirkung, also der Anordnung des Festlagers und des verschieblichen Lagers für die beiden Korbenden der der Figur 2 entspricht. Auch das erste Bauteil 2, 3 entspricht im wesentlichen dem der Figur 1, jedoch ist die zylindrische Stange 2 mit einem Ring 19 versehen, der einerseits eine Gleitführung innerhalb des zylindrischen Gehäuses des zweiten Bauteils und andererseits ein Widerlager für eine zweite Druckfeder 20 bildet, die mit ihrem axial gegenüberliegenden Ende an der Gleithülse 16 des verschiebbaren Lagers anliegt. Die Gleithülse 16 wird somit nicht nur von der Druckfeder 13 sondern zusätzlich auch noch von der Druckfeder 20 beaufschlagt, so daß die Dämpfungskraft bei der Gleitverbindung 18 positionsabhängig gemacht werden kann. Dies bedeutet, daß der jeweilige Abstand zwischen den Befestigungsösen 3, 10 die von der Druckfeder 20 auf die Gleithülse 16 ausgeübte Kraft bestimmt. Die resultierende Kraft aus den beiden Druckfedern 13, 20 hängt somit von dem jeweiligen Abstand zwischen den Befestigungsösen 3, 10 ab.

Figur 4 zeigt eine Gleitverbindung 21 mit einer positionsabhängigen Dämpfung, die relativ hoch ist, wenn die Befestigungsösen 3, 10 aufeinander zu bewegt werden, und die relativ gering ist, wenn die beiden Befestigungsösen 3, 10 voneinander weg bewegt werden. Das erste Korbende 4a ist an einem Konusring 23 festgelegt, der Teil eines Innenzylinders 24 ist, der seinerseits mit seinem in Figur 4 links liegenden Ende in ein das zweite Bauteil bildendes zylindrisches Gehäuse 25 eingeschraubt und somit fest mit diesem verbunden ist. Das zweite Korbende 4b ist in einem Lagerring 22 festgelegt, der mit Nasen 26 axialverschieblich in Schlitzführungen des Innenzylinders 24 geführt ist.

Auf der zylindrischen Stange 2 ist ein Ring 28 befestigt, an dem sich das eine Ende einer Druckfeder 41 abstützt, die mit ihrem anderen Ende an den Nasen 26 bzw. dem Lagerring 22 anliegt. Dadurch ist die auf die Stange 2 einwirkende Federkraft abhängig von dem jeweiligen Abstand der Befestigungsösen 3, 10. Um die Dämpfungscharakteristik der Gleitverbindung 21 zu verändern, kann z.B. zwischen der axial verschiebbaren Gleithülse 22 und dem ortsfesten Konusring 23 eine zusätzliche Druckfeder positioniert werden.

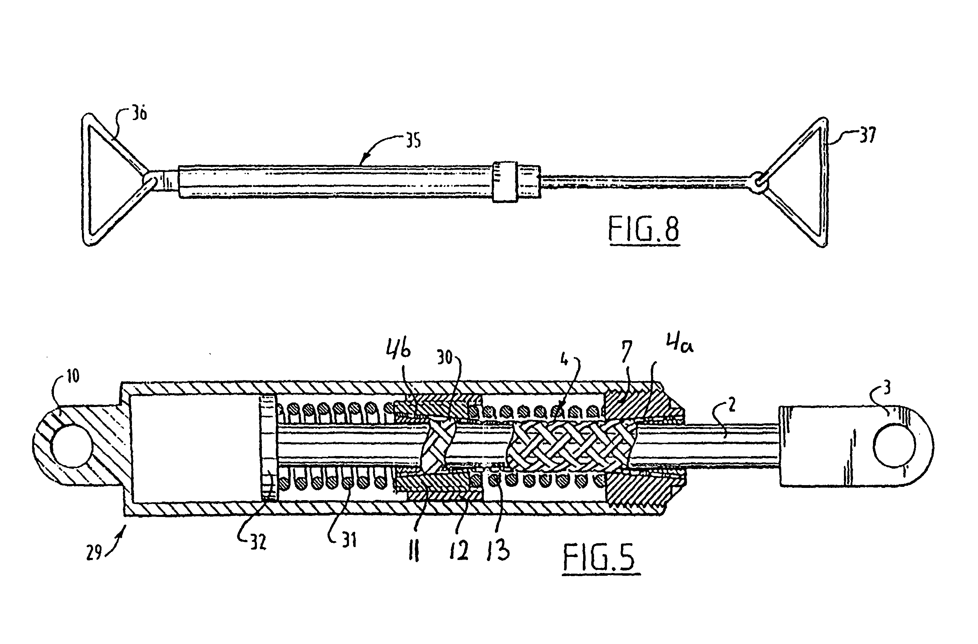

Figur 5 zeigt eine Gleitverbindung 29, die als Variante der Gleitverbindung 18 gemäß Figur 3 angesehen werden kann, ebenso wie die Gleitverbindung 1 der Figur 1 eine Variante der Gleitverbindung 14 gemäß Figur 2 darstellt. Vorgesehen ist wiederum eine axial verschiebbare Gleithülse 30, die mit dem zweiten Korbende 4b verbunden ist und das eine Widerlager einer Druckfeder 31 bildet, die sich mit ihrem anderen axialen Ende an einer Ringscheibe 32 der zylindrischen Stange 2 abstützt. Durch diese zusätzliche Druckfeder ergibt sich wiederum eine positionsabhängige Dämpfungscharakteristik, die relativ groß ist, wenn die beiden Befestigungsösen 3, 10 aufeinander zu bewegt werden und relativ klein, wenn diesen beiden Befestigungsösen 3, 10 voneinander weg bewegt werden.

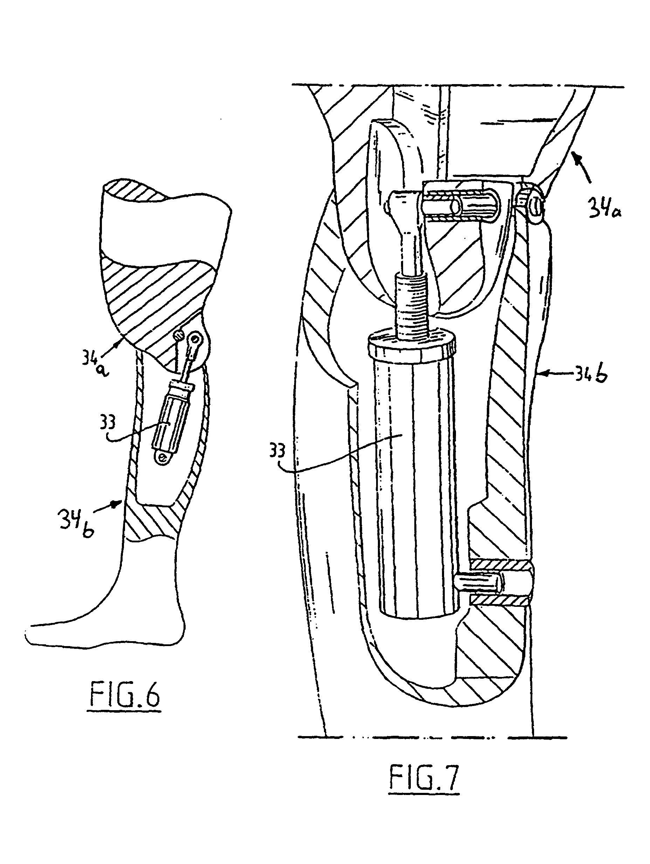

Die Figuren 6 und 7 zeigen eine einen Dämpfer bildende Gleitverbindung 33, die zwischen einer Oberschenkelprothese 34a und einer Unterschenkelprothese 34b vorgesehen ist.

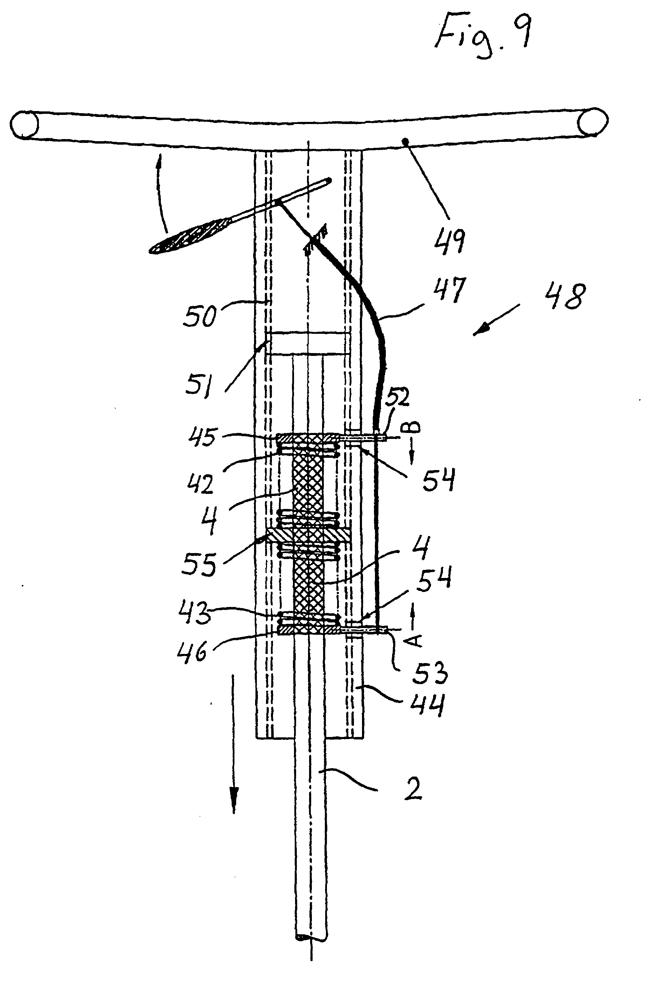

Figur 8 zeigt ein Fitnessgerät 35, das mit zwei Handgriffen 36, 37 versehen ist, die sich über eine erfindungsgemäße Gleitverbindung gegeneinanderdrücken bzw. auseinanderziehen lassen. Vorgesehen werden kann eine Gleitverbindung 14 gemäß Figur 2, wobei dann die Befestigungsöse 3 durch den Handgriff 37 und der Befestigungsflansch mit den Flanschlöchern 39 durch den Handgriff 36 ersetzt werden. Die größte Widerstandskraft ergibt sich dann beim Auseinanderziehen der beiden Handgriffe, während die Dämpfung beim Zusammenschieben des Fitnessgerätes sehr gering sein kann.

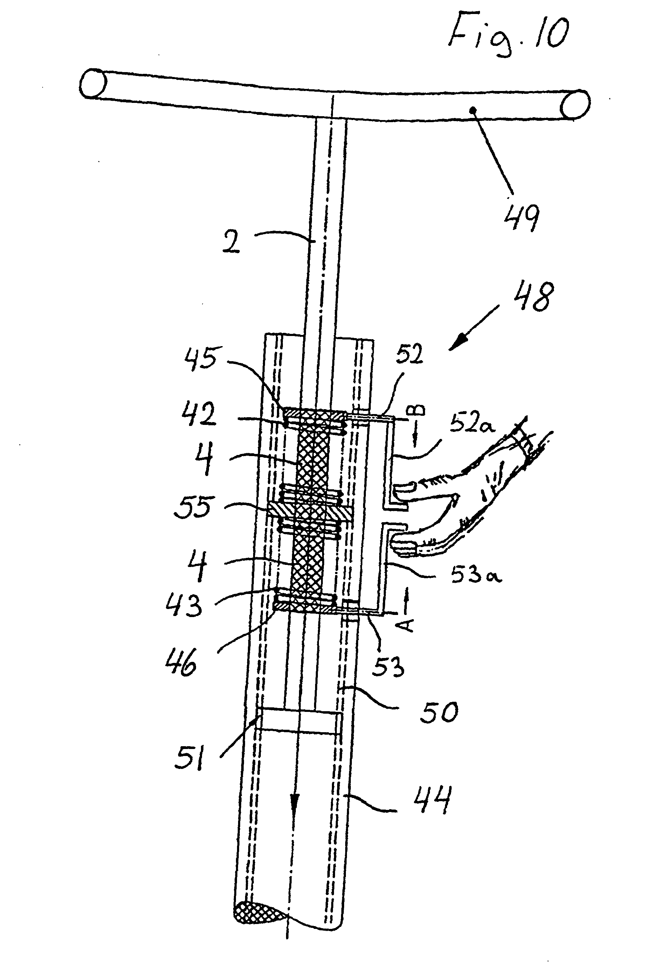

Figur 9 zeigt eine teleskopisch geteilte Lenksäule 48, die sich zusammensetzt aus einer ein erstes Bauteil bildenden zylindrischen Stange 2, die in einem ein zweites Bauteil 44 bildenden zylindrischen Gehäuse bzw. Rohr längsverschieblich geführt ist. Das zweite Bauteil 44 ist an seinem oberen Ende mit einem Lenkrad 49 bestückt und weist in seiner inneren zylindrischen Mantelfläche axial verlaufende Nuten 50 auf, in denen das erste Bauteil 2 mit Gleitstücken 51 längsverschieblich aber drehfest geführt ist.

Auf die Stange 2 ist ein Drahtkorb 4 geschoben, dessen beide sich axial gegenüberliegende Enden jeweils mit einer ein Federlager 45, 46 bildenden Ringscheibe verbunden sind, die in radialer Richtung mit einer Handhabe 52, 53 durch einen Axialschlitz 54 in der Rohrwandung des zweiten Bauteils 44 nach außen ragen. Die axiale Länge des Axialschlitzes 54 bestimmt die maximal mögliche Axialverschiebung der Federlager 45, 46 auf der Stange 2.

Der Drahtkäfig 4 wird von zwei axial hintereinander angeordneten Druckfedern 42, 43 koaxial umschlossen, die sich mit ihren jeweils außenliegenden Enden an dem Federlager 45 bzw. 46 und mit ihren innenliegenden Enden an einem mittleren Widerlager 55 abstützen. Die beiden Druckfedern 42, 43 halten den Drahtkorb 4 axial gestreckt und klemmen dadurch die Stange 2 in ihrer Zuordnung zum zweiten Bauteil 44 fest. Diese Klemmwirkung ist in bei den Axialrichtungen wirksam. Unter Einwirkung einer unfallbedingten Krafteinleitung über das Lenkrad 49 auf das zweite Bauteil 44 in Richtung des eingezeichneten Pfeiles oder aber bei entgegengerichteter Krafteinleitung über die das erste Bauteil bildende Stange 2 wird die vom Drahtkorb 4 aufgebrachte Klemmkraft überwunden; es erfolgt eine axiale Relativverschiebung zwischen den beiden Bauteilen 2, 44.

Anstelle nur eines Drahtkorbes 4 können auch zwei Drahtkörbe 4 vorgesehen werden.

Um eine axiale Lenkradverstellung vornehmen zu können, ist ein Bowdenzug 47 vorgesehen, der an den beiden Handhaben 52, 53 angreift, die bei Betätigung des Bowdenzuges in Richtung des eingezeichneten Pfeiles aus ihren Positionen A, B in axialer Richtung gegen die Wirkung der beiden Druckfedern 42, 43 etwas gegeneinander gezogen werden. Dies bewirkt eine axiale Verkürzung des oder der Drahtkörbe 4 und damit eine Aufhebung der von ihnen ausgeübten Klemmkraft, so daß das Lenkrad 49 mit dem zweiten Bauteil 44 in der gewünschten axialen Richtung gegenüber der Stange 2 verschoben werden kann. Die gewünschte Position wird dann durch Loslassen des Bowdenhebels fixiert.

Die Ausführungsform gemäß Figur 10 unterscheidet sich von der der Figur 9 in erster Linie darin, daß das Lenkrad 49 nunmehr mit der Stange 2 verbunden ist, während das zweite Bauteil 44 die eigentliche, im Fahrzeug festgelegte Lenksäule bildet. Außerdem ist anstelle des in Figur 9 dargestellten Bowdenzuges zur manuellen Aufhebung der Klemmverbindung zwischen den beiden Bauteilen 2, 44 eine zangenartige Ausbildung der beiden Handhaben 52, 53 vorgesehen. Durch Zusammendrücken zweier Ansätze 52a, 53a wird die Klemmverbindung aufgehoben und durch Loslassen der beiden Ansätze unter Wirkung der beiden Druckfedern 42, 43 wiederhergestellt.

## Patentansprüche

1. Lineare Gleitverbindung (1; 14; 18; 21; 29; 33) zwischen zwei relativ zueinander hin- und herverschiebbaren Bauteilen (2, 3, 9, 10; 3, 38, 39, 40; 2, 3, 10, 25) mit einer in zumindest einer der beiden axialen Verschieberichtungen wirksamen Dämpfung, **gekennzeichnet durch** einen mechanischen Reibungsdämpfer, der einen als Reibungs- bzw. Klemmelement wirkenden Drahtkorb (4) aufweist, der
das erste (2, 3; 3, 38) der beiden verschiebbaren Bauteile auf einen Längenabschnitt unter Anlage an dessen Mantelfläche konzentrisch umschließt,
mit seinem einen axialen Ende (erstes Korbende 4a) an dem zweiten Bauteil (9, 10; 39, 40; 25, 10) festgelegt und mit seinem anderen axialen Ende (zweites Korbende 4b) an diesem zweiten Bauteil axial längsverschieblich gelagert ist, und
an diesem zweiten Korbende (4b) von einem federelastischen Spannelement (13; 41) in Axialrichtung so beaufschlagt wird, daß der Drahtkorb (4) in seiner axialen Länge etwas gedehnt wird unter gleichzeitigem weitgehend radialen Andrücken gegen die von ihm umschlossene Mantelfläche des ersten Bauteils (2, 3; 3, 38).

2. Gleitverbindung nach Anspruch 1, **dadurch gekennzeichnet, daß** der vom Drahtkorb (4) umschlossene und in diesem längsverschieblich geführte Abschnitt des ersten Bauteiles (2, 3; 3, 38) einen runden Querschnitt aufweist.

3. Gleitverbindung nach Anspruch 1 oder 2, **dadurch gekennzeichnet, daß** das zweite Bauteil (9, 10; 39, 40; 25, 10) ein zylindrisches Gehäuse (9; 25; 40) aufweist, das den Drahtkorb (4) konzentrisch umschließt.

4. Gleitverbindung nach Anspruch 1, 2 oder 3, **dadurch gekennzeichnet, daß** das federelastische Spannelement zumindest eine Druckfeder (13) aufweist, die den Drahtkorb (4) konzentrisch umschließt und sich mit ihrem einen Ende an dem axial längsverschieblich gelagerten Korbende (4b) abstützt.

5. Gleitverbindung nach Anspruch 4, **dadurch gekennzeichnet, daß** sich die zumindest eine Druckfeder (13) mit ihrem anderen Ende an dem zweiten Bauteil (9, 10; 39, 40; 25, 10) abstützt. (Figuren 1, 2 und 5)

6. Gleitverbindung nach Anspruch 4, **dadurch gekennzeichnet, daß** sich die zumindest eine Druckfeder (13) mit ihrem anderen Ende an dem ersten Bauteil (2, 3) abstützt. (Figur 4)

7. Gleitverbindung nach einem der vorhergehenden Ansprüche, **gekennzeichnet durch** eine zweite Druckfeder (20; 31), die sich mit ihrem einen Ende an dem axial längsverschieblich gelagerten Korbende (4b) und mit ihrem anderen Ende am ersten Bauteil (2, 3) abstützt. (Figuren 3 und 5)

8. Gleitverbindung nach einem der vorhergehenden Ansprüche, **dadurch gekennzeichnet, daß** das federelastische Spannelement (13; 20; 41) justierbar ist.

9. Gleitverbindung nach einem der vorhergehenden Ansprüche, **dadurch gekennzeichnet, daß** der Drahtkorb (4) aus einem Drahtgewebe (6) besteht.

10. Gleitverbindung nach einem der vorhergehenden Ansprüche, **dadurch gekennzeichnet, daß** sich die beiden Enden (4a, 4b) des Drahtkorbes (4) jeweils zum Korbende konisch erweitern und durch einen inneren Konusklemmring (8) festgelegt sind.

11. Gleitverbindung nach einem der vorhergehenden Ansprüche, **dadurch gekennzeichnet, daß** das zweite Korbende (4b) in einer Gleithülse (11; 16; 22) festgelegt ist, die in einem fest mit dem zweiten Bauteil (9, 10; 39, 40) verbundenen Lagerring (12; 17) längsverschiebbar geführt ist.

12. Gleitverbindung nach Anspruch 11, **dadurch gekennzeichnet, daß** der Lagerring (12; 17) zugleich eine Verdrehsicherung für die Gleithülse (11; 16) bildet.

13. Gleitverbindung nach einem der vorhergehenden Ansprüche, **dadurch gekennzeichnet, daß** in radialer Anordnung zwischen dem ersten Korbende (4a) und dem längsverschieblich geführten Abschnitt des ersten Bauteils (2, 3) für letzteren ein achsparalleles Führungselement vorgesehen ist.

14. Gleitverbindung nach einem der vorhergehenden Ansprüche, **gekennzeichnet durch** zwei hintereinander angeordnete Druckfedern (42, 43), die sich mit ihren benachbarten Federenden an dem zweiten Bauteil (44) abstützen und mit ihren jeweils anderen Federenden an jeweils einem axial gegeneinander verschiebbaren Federlager (45, 46) anliegen. (Figur 9 und 10)

15. Gleitverbindung nach Anspruch 14, **dadurch gekennzeichnet, daß** die axiale Verschiebung der beiden Federlager (45, 46) gegeneinander manuell, z. B. durch Betätigung eines Bowdenzuges (47) erfolgt.

16. Gleitverbindung nach Anspruch 14 oder 15, **dadurch gekennzeichnet, daß** die beiden Bauteile (2, 44) eine teleskopisch längsverstellbare Lenksäule (48) bilden, wobei das eine Bauteil (44) mit einem Lenkrad (49) versehen ist und das andere Bauteil (2) an einem Fahrzeugrahmen festlegbar ist. (Figuren 9 und 10)

17. Gleitverbindung nach einem der Ansprüche 1 bis 13, **gekennzeichnet durch** ihre Verwendung als Dämpfer in einer Prothese (34) oder Orthese. (Figuren 6 und 7)

18. Gleitverbindung nach einem der Ansprüche 1 bis 13, **gekennzeichnet durch** ihre Verwendung als Dämpfer in einem Fitnessgerät (35). (Figur 8)

## Claims

1. Linear sliding connection (1; 14; 18; 21; 29; 33) between two structural parts (2, 3, 9, 10; 3, 38, 39, 40; 2, 3, 10, 25) which can be displaced to and fro, relative to one another, and have damping which is operative in at least one of the two axial directions of displacement,
**characterised by** a mechanical friction damper which includes a wire basket (4) which acts as a friction or clamping element and
concentrically encloses the first (2, 3; 3, 38) of the two displaceable structural parts over a section of its length, lying adjacent its outer surface,
is secured in position, by one of its axial ends (the first end 4a of the basket), on the second structural part (9, 10; 39, 40; 25, 10) and is mounted, by its other axial end (the second end 4b of the basket), on the said second structural part in such a way as to be longitudinally displaceable axially, and
is acted upon in the axial direction at the said second end (4b) of the basket by an elastic tensioning element (13; 41) in such a way that the wire basket (4) is stretched somewhat in its axial length while simultaneously pressing predominantly radially, against the outer surface of the first structural part (2, 3; 3, 38) which it encloses.

2. Sliding connection according to claim 1, **characterised in that** that section of the first structural part (2, 3; 3, 38) which is enclosed by the wire basket (4) and is guided in a longitudinally displaceable manner in the said wire basket has a round cross-section.

3. Sliding connection according to claim 1 or 2,
**characterised in that** the second structural part (9, 10; 39, 40; 25, 10) has a cylindrical housing (9; 25; 40) which concentrically encloses the wire basket (4).

4. Sliding connection according to claim 1, 2 or 3,
**characterised in that** the elastic tensioning element has at least one compression spring (13) which concentrically encloses the wire basket (4) and is supported, by one of its ends, on that end (4b) of the basket which is mounted so as to be longitudinally displaceable axially.

5. Sliding connection according to claim 4, **characterised in that** the at least one compression spring (13) is supported by its other end on the second structural part (9, 10; 39, 40; 25, 10). (Figures 1, 2 and 5)

6. Sliding connection according to claim 4, **characterised in that** the at least one compression spring (13) is supported by its other end on the first structural part (2, 3). (Figure 4)

7. Sliding connection according to one of the preceding claims, **characterised by** a second compression spring (20; 31) which is supported by one of its ends on that end (4b) of the basket which is mounted so as to be longitudinally displaceable axially, and by its other end on the first structural part (2, 3). (Figures 3 and 5)

8. Sliding connection according to one of the preceding claims, **characterised in that** the elastic tensioning element (13; 20; 41) is adjustable.

9. Sliding connection according to one of the preceding claims, **characterised in that** the wire basket (4) consists of a wire cloth (6).

10. Sliding connection according to one of the preceding claims, **characterised in that** the two ends (4a, 4b) of the wire basket (4) widen conically towards the end of the basket in each case and are secured in position by an inner conical clamping ring (8).

11. Sliding connection according to one of the preceding claims, **characterised in that** the second end (4b) of the basket is secured in position in a sliding bush (11; 16; 22) which is guided in a longitudinally displaceable manner in a bearing ring (12; 17) fixedly connected to the second structural part (9, 10; 39, 40).

12. Sliding connection according to claim 11,
**characterised in that** the bearing ring (12; 17) at the same time forms an anti-twisting arrangement for the sliding bush (11; 16).

13. Sliding connection according to one of the preceding claims, **characterised in that** an axially parallel guide element for the first structural part (2, 3) is provided in a radial disposition between the first end (4a) of the basket and that section of the said first structural part (2, 3) which is guided in a longitudinally displaceable manner.

14. Sliding connection according to one of the preceding claims, **characterised by** two compression springs (42, 43) which are disposed one behind the other, are supported by their adjacent spring ends on the second structural part (44) and rest, by their other spring ends in each case, against a spring bearing (45, 46) in each case, which spring bearings are axially displaceable in relation to one another. (Figures 9 and 10)

15. Sliding connection according to claim 14,
**characterised in that** the axial displacement of the two spring bearings (45, 46) towards one another takes place manually, for example by actuating a Bowden cable (47).

16. Sliding connection according to claim 14 or 15,
**characterised in that** the two structural parts (2, 44) form a steering column (48) which can be longitudinally shifted in a telescopic manner, one structural part (44) being provided with a steering wheel (49) and the other structural part (2) being capable of being secured in position on the frame of a vehicle. (Figures 9 and 10)

17. Sliding connection according to one of claims 1 to 13,
**characterised by** its use as a damper in a prosthesis (34) or orthosis. (Figures 6 and 7)

18. Sliding connection according to one of claims 1 to 13,
**characterised by** its use as a damper in a fitness apparatus (35). (Figure 8)

## Revendications

1. Liaison coulissante linéaire (1 ; 14 ;18 ; 21 ; 29 ; 33) entre deux pièces (2, 3, 9, 10 ; 3, 38, 39, 40 ; 2, 3, 10, 25) coulissantes en va et vient l'une par rapport à l'autre avec un amortissement agissant dans l'une au moins des deux directions de coulissement axial, **caractérisée par** un amortisseur à friction mécanique qui présente une cage de fils tels que métalliques (4) opérant comme élément de friction et de serrage, qui:
entoure concentriquement la première (2, 3 ; 3, 38) des deux pièces coulissantes sur une partie longitudinale en s'appuyant sur sa paroi latérale,
est fixée par sa première extrémité axiale (première extrémité 4a de la cage) à la deuxième pièce (9, 10 ; 39, 40 ; 25, 10), et montée en coulissement axial longitudinal par son autre extrémité axiale (deuxième extrémité 4b de la cage) sur cette deuxième pièce, et
est sollicitée en direction axiale à cette deuxième extrémité (4b) de la cage par un élément de contrainte (13 ; 41) élastique de manière que la cage de fils (4) est légèrement étirée dans sa longueur axiale tout en s'appuyant simultanément de manière essentiellement radiale contre la paroi latérale, qu'elle entoure, de la première pièce (2, 3 ; 3, 38).

2. Liaison coulissante selon la revendication 1, **caractérisée en ce que** la partie de la première pièce (2, 3 ; 3, 38) qui est entourée par la cage de fils (4) en y étant guidée en coulissement longitudinal présente une section transversale ronde.

3. Liaison coulissante selon la revendication 1 ou 2, **caractérisée en ce que** la deuxième pièce (9, 10 ; 39, 40 ; 25, 10) présente un boîtier cylindrique (9 ; 25 ; 40) qui entoure concentriquement la cage de fils (4).

4. Liaison coulissante selon la revendication 1, 2 ou 3 **caractérisée en ce que** l'élément de contrainte élastique comprend au moins un ressort de compression (13) qui entoure concentriquement la cage de fils (4) et s'appuie par sa première extrémité à l'extrémité (4b) de la cage qui est montée en coulissement longitudinal axial.

5. Liaison coulissante selon la revendication 4, **caractérisée en ce que** l'au moins un ressort de compression (13) s'appuie par son autre extrémité sur la deuxième pièce (9, 10 ; 39, 40 ; 25, 10) (figures 1, 2 et 5).

6. Liaison coulissante selon la revendication 4, **caractérisée en ce que** l'au moins un ressort de compression (13) s'appuie par son autre extrémité sur la première pièce (2, 3) (figure 4).

7. Liaison coulissante selon l'une des revendications précédentes, **caractérisée par** un deuxième ressort de compression (20; 31) qui s'appuie par sa première extrémité sur l'extrémité (4b) de la cage qui est montée en coulissement longitudinal axial et par son autre extrémité sur la première pièce (2, 3) (figures 3 et 5).

8. Liaison coulissante selon l'une des revendications précédentes, **caractérisée en ce que** l'élément de contrainte élastique ( 13 ; 20 ; 41) est ajustable.

9. Liaison coulissante selon l'une des revendications précédentes, **caractérisée en ce que** la cage de fils (4) consiste en un tissu de fils tels que métalliques (6).

10. Liaison coulissante selon l'une des revendications précédentes, **caractérisée en ce que** les deux extrémités (4a, 4b) de la cage de fils (4) s'élargissent chacune de façon conique vers l'extrémité de la cage et sont chacune fixées par une bague de serrage intérieure conique (8).

11. Liaison coulissante selon l'une des revendications précédentes, **caractérisée en ce que** la deuxième extrémité (4b) de la cage est fixée dans un manchon coulissant (11 ; 16 ; 22) qui est guidé en coulissement longitudinal dans une bague de portée (12 ; 17) liée rigidement avec la deuxième pièce (9, 10 ; 39, 40).

12. Liaison coulissante selon la revendication 11, **caractérisée en ce que** la bague de portée (12; 17) constitue en même temps une immobilisation en rotation pour le manchon coulissant (11 ; 16).

13. Liaison coulissante selon l'une des revendications précédentes, **caractérisée en ce qu'**en agencement radial entre la première extrémité (4a) de la cage et la partie longitudinalement coulissante de la première pièce (2, 3), il est prévu pour cette dernière un élément de guidage parallèle à l'axe.

14. Liaison coulissante selon l'une des revendications précédentes, **caractérisée par** deux ressorts de compression (42, 43) disposés l'un derrière l'autre, qui s'appuient par leurs extrémités voisines sur la deuxième pièce (44) et reposent chacun par son autre extrémité sur une semelle de ressort (45, 46) respective, ces semelles étant axialement coulissantes l'une par rapport à l'autre (figures 9 et 10).

15. Liaison coulissante selon la revendication 14, **caractérisée en ce que** le coulissement axial des deux semelles de ressort (45, 46) l'une par rapport à l'autre a lieu manuellement, par exemple en actionnant un câble Bowden (47).

16. Liaison coulissante selon la revendication 14 ou 15, **caractérisée en ce que** les deux pièces (2, 44) constituent une colonne de direction (48) réglable en longueur de manière télescopique, l'une des pièces (44) étant munie d'un volant de direction (49) et l'autre pièce (2) pouvant être fixée à un châssis du véhicule (figures 9 et 10).

17. Liaison coulissante selon l'une des revendications 1 à 13, **caractérisée par** son utilisation comme amortisseur dans une prothèse (34) ou orthèse (figures 6 et 7).

18. Liaison coulissante selon l'une des revendications 1 à 13, **caractérisée par** son utilisation comme amortisseur dans un appareil de mise en forme physique (35) (figure 8).
